# EUROPEAN PATENT SPECIFICATION

(11) **EP 2 058 245 B1**
(45) Date of publication and mention of the grant of the patent: **07.09.2011**
(21) Application number: 08018722.2
(22) Date of filing: 27.10.2008
(51) Int. Cl.: B65D 90/52, B60P 3/22, B60K 15/077

(54) **Segment for making an anti-whip partition for a liquid container that can be thoroughly cleaned**
Segment für eine Schwallschutztrennplatte eines Flüssigkeitsbehälters der gründlich gereinigt werden kann
Segment pour une cloison antibélier d'un récipient liquide qui peut être nettoyé en détail

(30) Priority: 07.11.2007 BE 200700539
(43) Date of publication of application: 13.05.2009
(73) Proprietor: VAN HOOL, naamloze vennootschap, 2500 Lier (BE)
(72) Inventor: van Hool, Jozef Karel, 2500 Lier (Koningshooikt) (BE)
(74) Representative: Donné, Eddy

(56) References cited:
- WO-A-92/03359
- FR-A- 1 483 776
- FR-A- 1 575 773
- GB-A- 2 086 812
- NL-A- 6 500 968
- US-B1- 6 220 287

## Description

The present invention concerns a segment for making an anti-whip partition for a cylindrical liquid container that can be thoroughly cleaned, according to the preamble of claims 1 or 2. Such segment is disclosed by document FR 1.488.776.

It is known that, for the transport of liquids, a liquid container is preferably used whose inner space is divided in compartments in order to prevent the to-and-fro movement of the liquid, after accelerating or braking, to have an all too great influence on the dynamic behaviour of the lorry.

The cylindrical liquid containers that are designed for transport can be divided in two types.

With a first type of cylindrical liquid container, its cleanability is of importance. These containers are designed for example for the transport of varying types of liquid or of liquids that are meant for consumption or other critical applications.

The second type of cylindrical liquid container must not meet the above-mentioned cleanability requirement, as it is designed to always transport the same liquid.

The cylindrical liquid containers of this second type are sometimes provided with partitions made of aluminium and/or steel plates that are mutually connected by means of bolts or the like. The present invention does not concern this second type of cylindrical liquid container, nor a partition for such a container. The present invention only concerns cylindrical liquid containers that can be thoroughly cleaned, as well as the partitions therefor.

The present invention also concerns a method for manufacturing partitions for both types of cylindrical liquid containers.

Due to the cleanability requirements, the first type of cylindrical liquid container has strongly deviant technical characteristics.

Such a cylindrical container must have a smooth inner wall for example, and as little corners and edges as possible. For every compartment, the shell of such a container is usually provided with a sealable opening situated at the top, hereafter called manholes, whose dimensions may mutually vary.

The cylindrical container is usually cleaned by lowering a sprinkler head through such a manhole. The entire compartment is cleaned under high pressure and with a rotating head. It is important that all places inside the container are accessible as of the positions which the sprinkler heads may occupy, in particular vertically under the aforesaid manholes.

Such cleanable liquid containers usually have a cylindrical shape, whereby the two far ends have a seamless, dish-shaped lid.

Also the partitions must be made such that, as such and also at the connection with the container's shell, they have soft curves and are free of edges and corners.

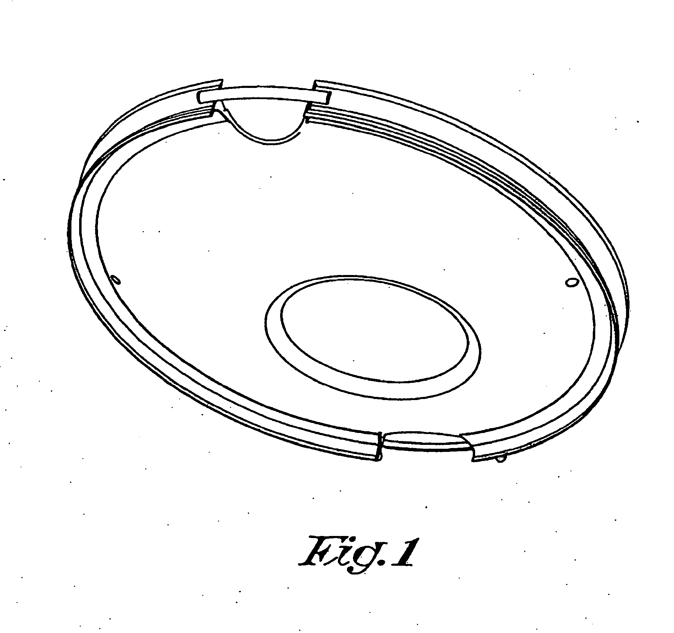

A known partition mainly consists of a curved, round disc made of steel with a turned edge which, as is represented in figure 1, is provided with a relatively large and somewhat eccentrically situated opening, two diagonally opposed recesses at the side edge, and at each time a quarter of a turn thereof two diagonally opposed smaller openings.

According to the regulations, the ratio between the surface occupied by the openings and the total surface inside the perimeter of the disc should be 30% at the most.

Such partitions are provided in a cylindrical container with the aforesaid recesses in the side edge provided vertically on top of one another when the container is oriented with its manholes on top in its normal position of use.

The somewhat eccentrically situated opening is designed to offer a passage to a person lowering himself in the container via a manhole and wanting to go from one compartment to another one. That is why it is provided somewhat under the centre of the disc in view of a suitable crossover height.

Moreover, said central opening must be made spacious in view of the safety regulations; for example, should a person succumb, it may not form an obstruction when trying to save the person from this awkward position by moving him to a following compartment.

The two diagonally opposed recesses in the side edge are designed to connect the compartments, in the liquid phase situated at the bottom as well as in the gas phase situated at the top, such that a levelling is at all times obtained, in the lowermost as well as in the topmost positions.

The two smaller openings at a quarter of a turn thereof are designed to empty a container by means of pumping should it have tipped over.

The side edge of such a partition is made in a special way and aims a curved transition between the partition and the container's shell, on either side of the partition.

To this end, the disc is bent at the perimeter on the one hand, towards one of the sides of the partition, and it is provided with a ring with a bent section on the other side of the partition on the other hand.

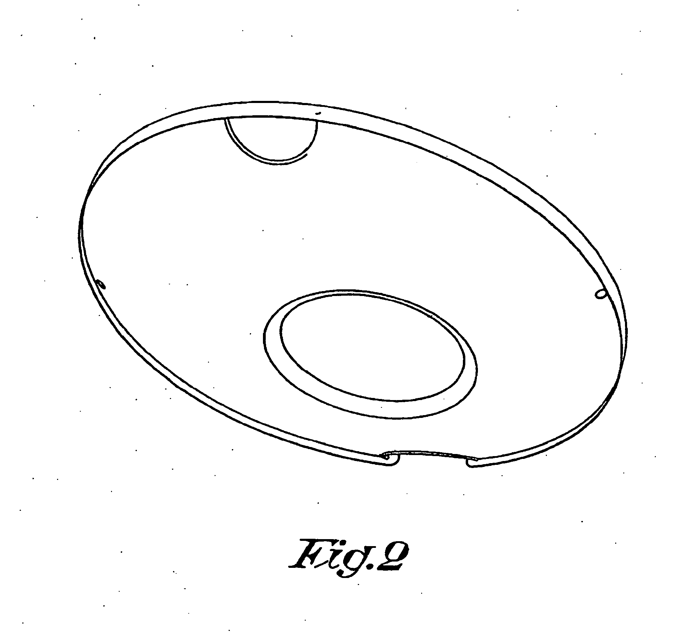

Figure 2 represents another known partition which differs from the above-discussed partition represented in figure 1 in that the peripheral edge is provided with a flat ring as opposed to the specific embodiment of figure 1.

The flat ring on the peripheral edge aims a cheaper connection with the container wall as compared to the turned edge.

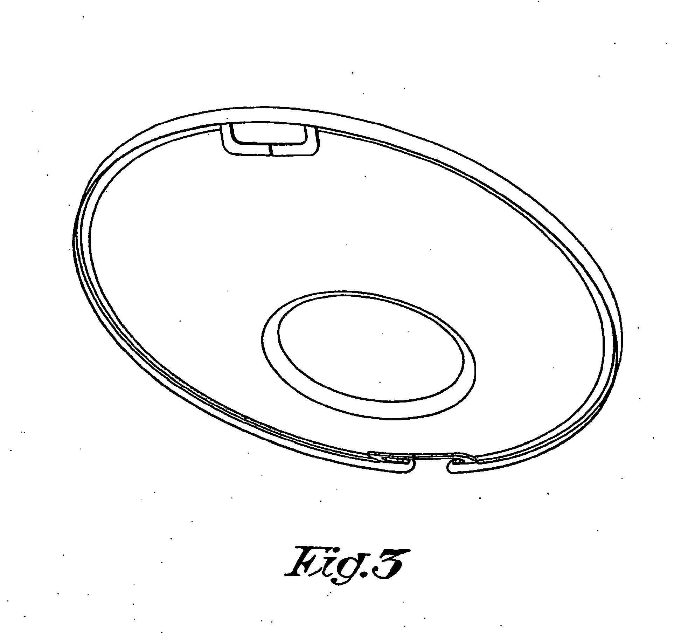

However, the acute angle between the bent disc and the peripheral ring is difficult to clean, and that is why another variant was introduced whereby the disc is only made spherical in the central part up to a distance from the peripheral edge, as is represented in figure 3.

Figure 4 represents a known variant whereby the somewhat eccentric opening in the partition panel and the recess to be provided at the top are combined in the peripheral edge into one recess which extends as of the peripheral edge up to under the centre of the disc.

This embodiment aims to provide such a partition under a manhole in order to restrict the number of manholes. However, in practice it turned out that this may prevent a thorough cleaning of the compartments.

Figures 5 to 12 represent variants which are all in line with the partitions as discussed above.

The known partitions for cleanable liquid containers are problematic in that they are expensive as a result of the high precision that is required and the many labour hours that are required to mount them.

The invention hereby aims a segment for making an anti-whip partition for a liquid container that can be thoroughly cleaned, which can be produced at a relatively low cost and which can be provided inside the container.

The problem of the present invention is solved by a segment according to claims 1 or 2.

According to a preferred embodiment, the partition is formed of two segments.

FR 1.483.776 describes a partition composed of four partial half circular segments or crescents that are connected two by two to result in a stronger partition segment. This design has the disadvantage that the space between two connected crescent segments is lost for liquid transportation, and that it makes the partitions double walled and thus heavier.

GB 2.086.812 describes a partition composed of two half circular segments, connected in the center in such a way that one half circular segment is movable. This design has the disadvantage that there is no manhole available for a person to move from one compartment to another and that it is difficult to insert. The design is intended for tilted cylindrical liquid containers and facilitates evacuation of the liquid when the container is in a tilted position.

The present invention concerns a segment for making an anti-whip partition for a cylindrical liquid container that can be thoroughly cleaned, whereby it is formed of a pipe having a drop-shaped section and a predominantly crescent shaped plate element (4), and whereby the plate element has a bent shape, and whereby the segment is built such that it may occupy a smaller surface than the sectional plane crosswise to the longitudinal direction of the container, wherein the pipe is formed of several deep folds at a side edge of the plate element.

The invention also concerns a liquid container that can be thoroughly cleaned in which partitions formed of two segments according to the invention have been provided.

This design has the advantage of being easy to clean due to the straight lines and smooth surfaces, and to be easily inspectable from the manholes on top of the cylindrical container. Also passage is provided for persons to move from one compartment to the next through the open middle section of the partition, in between the two crescent shaped segments.

In order to better explain the characteristics of the invention, the following preferred embodiment of the invention is described as an example only without being limitative in any way, with reference to the accompanying drawings, in which:

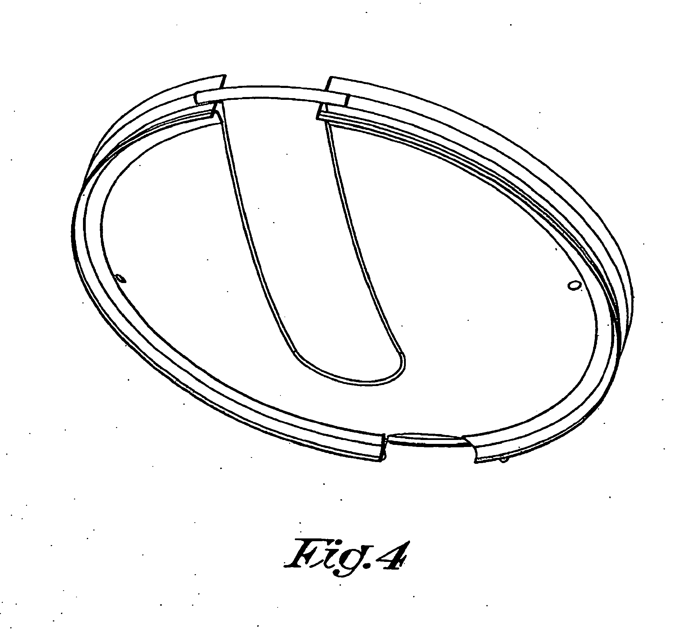

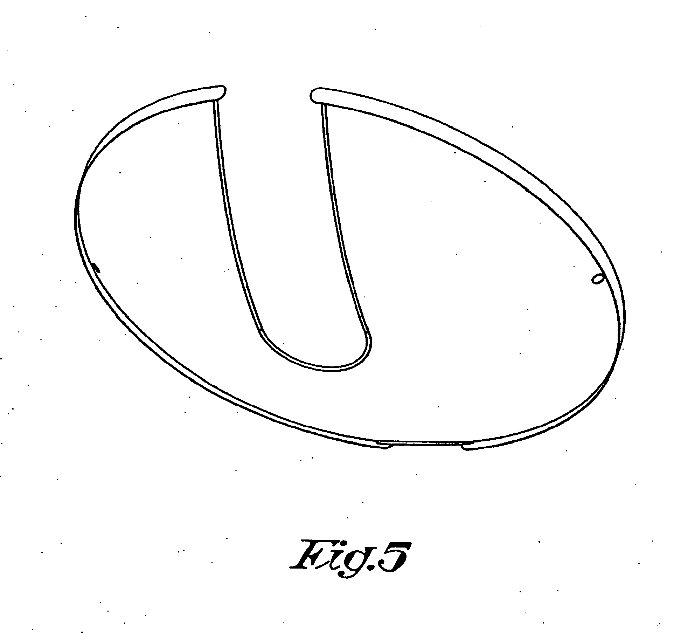

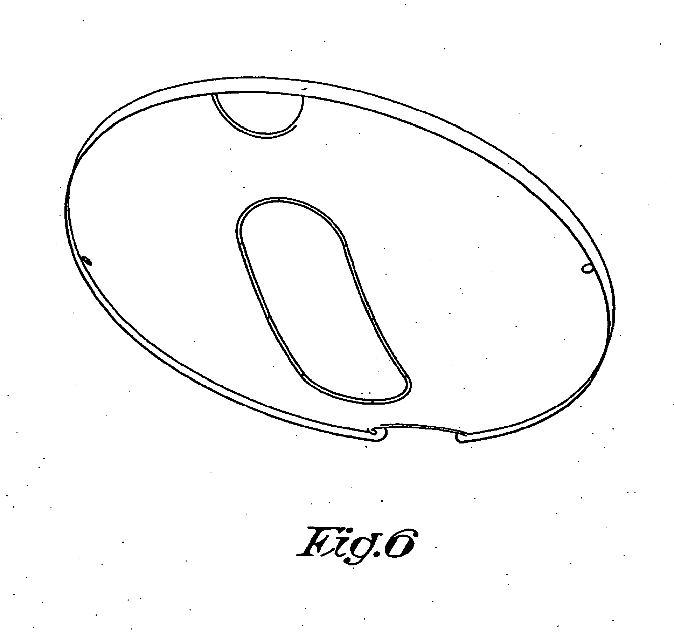

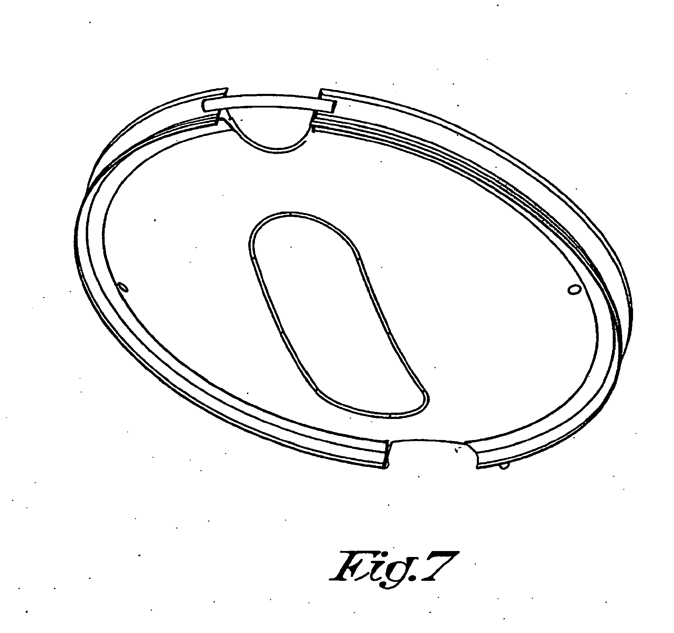

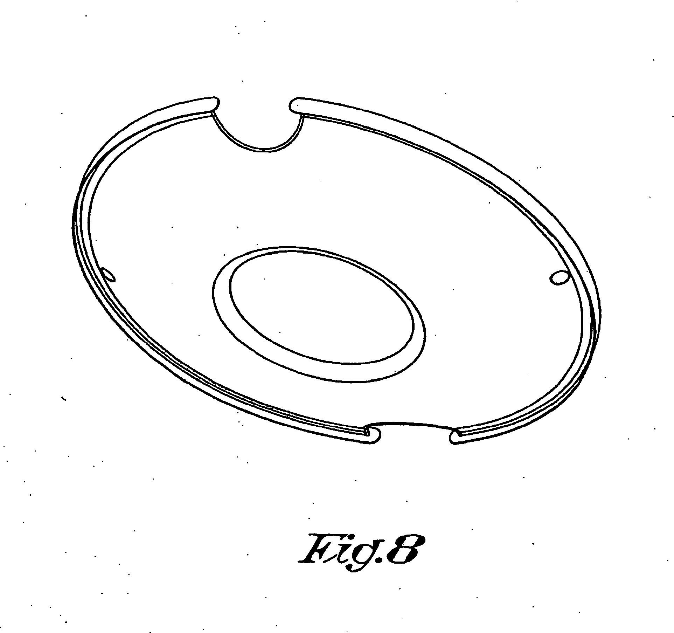

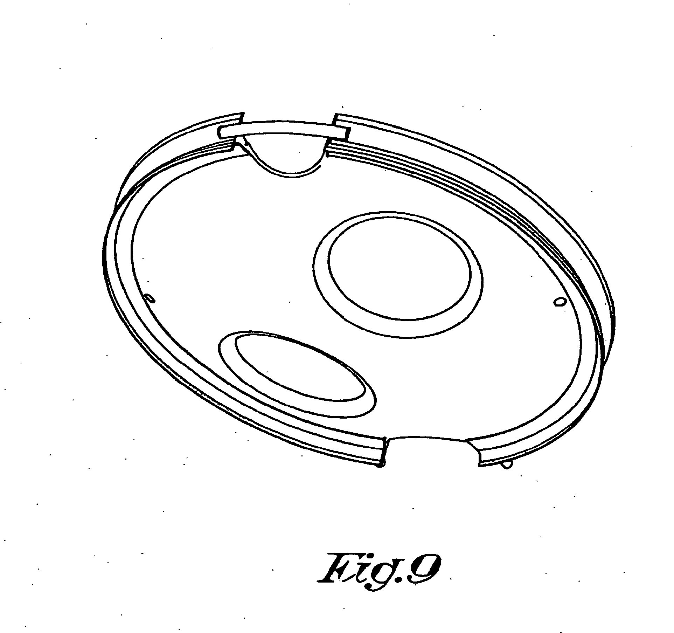

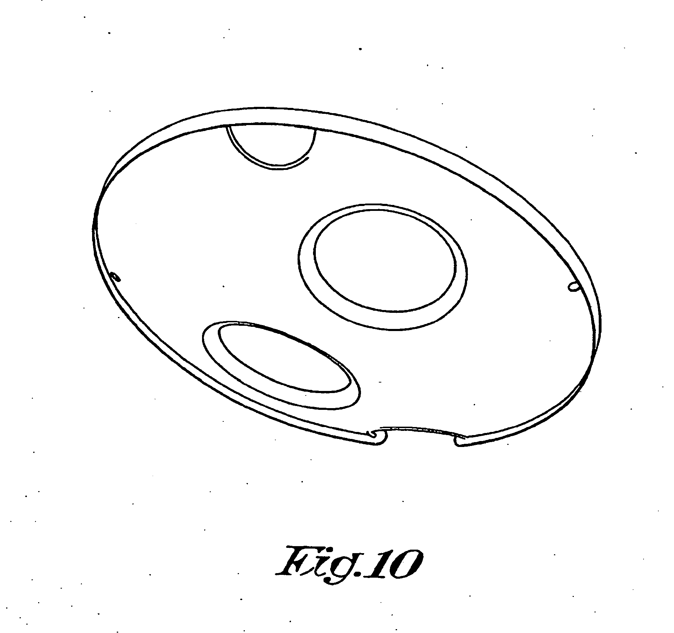

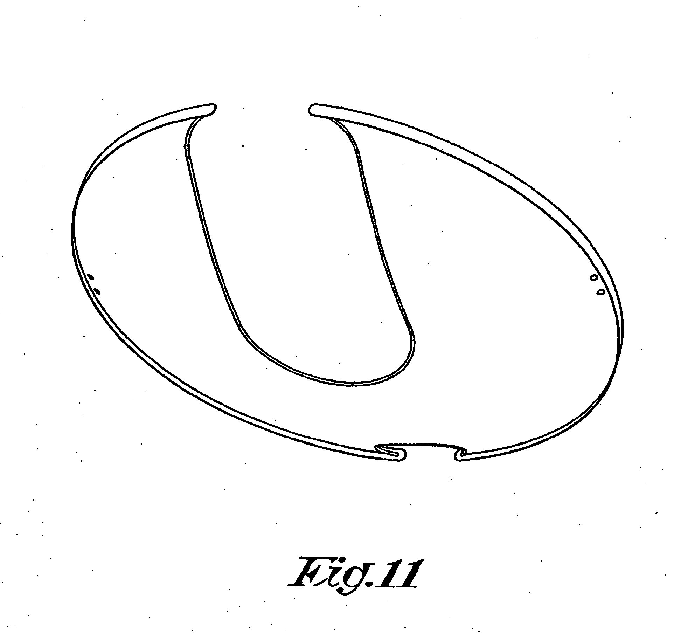

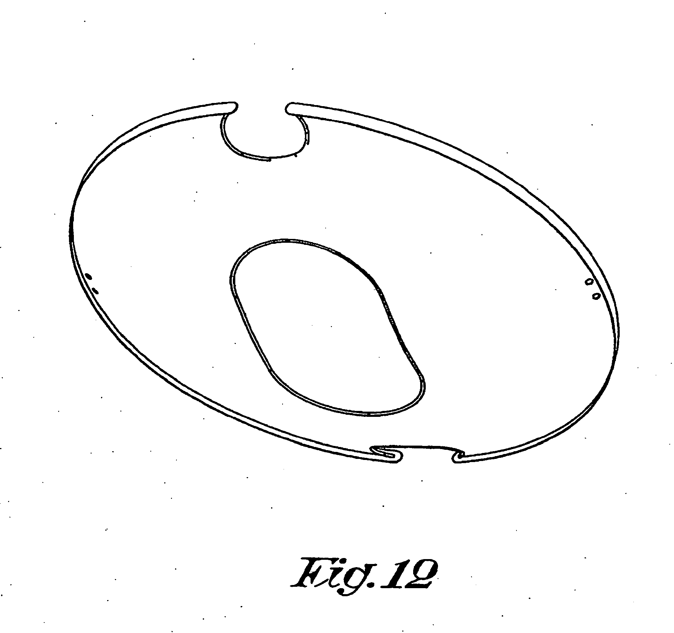

figures 1 to 12 represent known partitions;

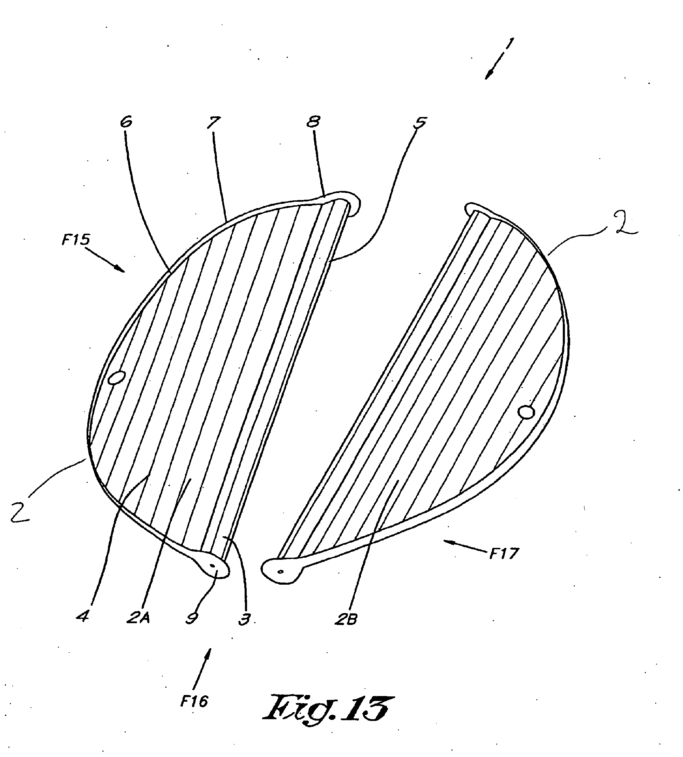

figure 13 schematically represents a partition according to the invention seen in perspective;

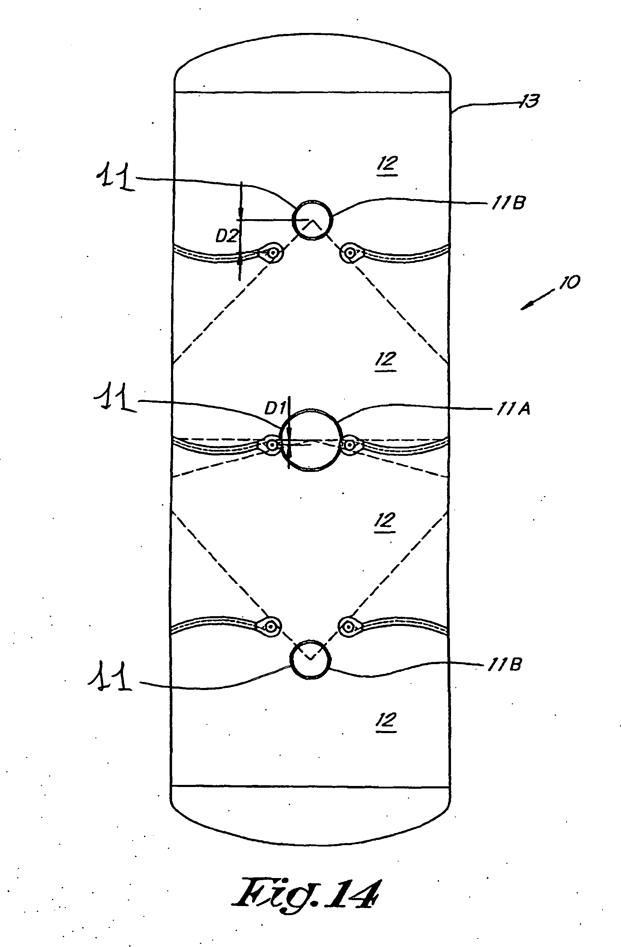

figure 14 schematically represents a top view of a liquid container in which several partitions according to figure 13 have been provided;

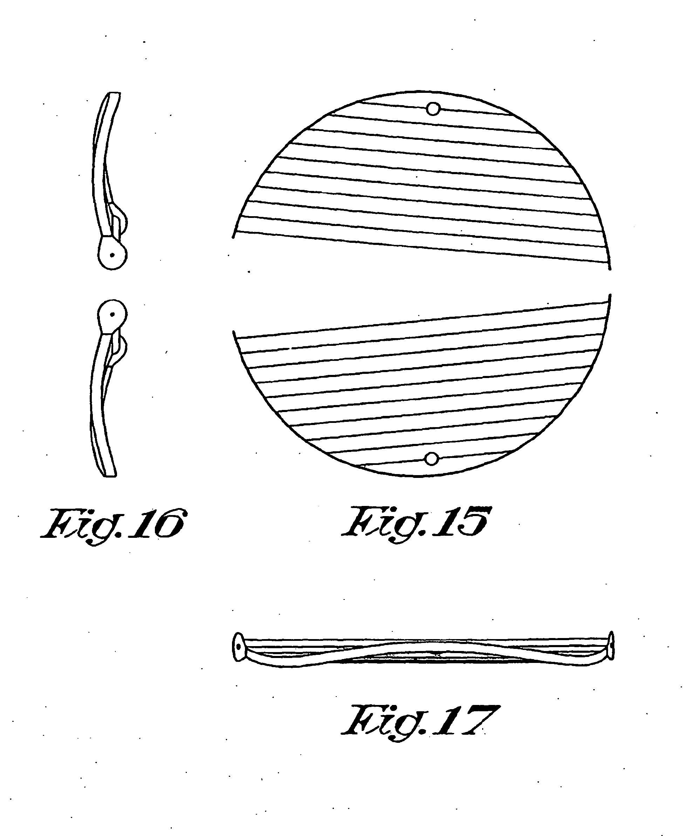

figure 15 represents a view according to arrow F15 of the partition in figure 13;
figure 16 represents a view according to arrow F16 of the partition in figure 13;
figure 17 represents a view according to arrow F17 of the partition in figure 13;

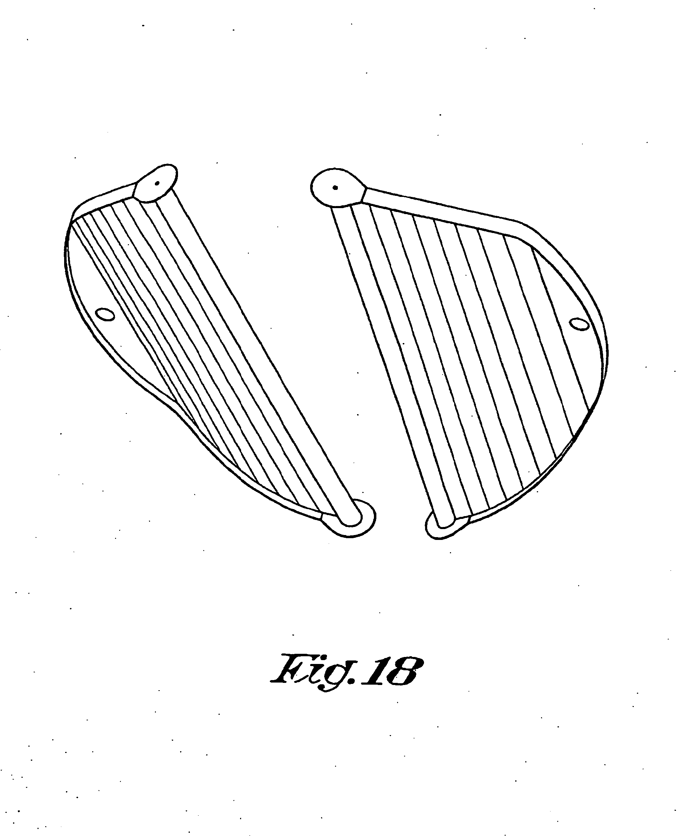

figures 18 to 20 schematically represent variants of a partition according to the invention, seen in perspective.

Figure 13 represents a practical embodiment of a partition 1 according to the invention.

The partition 1 in this case is formed of two segments 2, i.e. a first segment 2A and a second segment 2B.

Every segment 2 is formed of a pipe 3 having a drop-shaped section, a predominantly crescent-shaped plate element 4 which has a somewhat bent shape in this embodiment thanks to the presence of several bending lines obtained by means of folding treatments of the plate element 4.

In this embodiment, the pipe 3 is formed of several deep folds at a side edge 5 of the plate element 4. The semicircular perimeter 6 is provided with a standing edge 7, in this case formed of a metal strip which extends as of one far end 8 of the pipe 3 up to the other far end 9 of the pipe 3.

These segments 2 are easy to provide, and it is done by inserting the segments 2 in the inner space of the container 10 under construction, represented in figures 14 and 15, which container 10 is at least still open on one of both far ends at this stage.

The positioning of the segments is special and as represented in figures 14 and 15.

Figure 14 schematically represents a container 10 as seen from above, whereby three manholes 11 are provided in the represented embodiment, in particular one more spacious manhole 11A with a central position and two smaller manholes 11B at a distance thereof.

Figure 15 shows two segments 2 that have been provided, seen as of one of both crosscut far ends of the container 10.

The pipes 3 are placed at a small distance from one another, such that the space between both pipes 3 is sufficient for a person to move in, from a first compartment 12 to a second compartment 12, as well as from a manhole 11 into the container 10.

Indeed, in the case of the larger manhole 11A, the segments 2 are placed in line and under the manhole 11A, and the special construction of the partition 1 according to the invention makes it possible for a person to still enter the container 10 via the manhole 11A in that case.

The segments 2 concerned are provided in particular at a small distance D1 from the centre line of the manhole 11A, crosswise to the longitudinal direction of the container 10.

For the two smaller manholes 11B, the segments 2 are each time provided at a larger distance D2 from the manholes 11B, in particular somewhat in the direction of the larger manhole 11A.

Moreover, the latter segments 2 near the smaller manholes 11B are directed with their hollow sides towards the nearest manholes 11B.

The different segments 2 are moreover erected such in this case that the pipes 3 and the most laterally directed part of the segments 2 are situated in a plane crosswise to the longitudinal direction of the cylindrical container 10.

This special orientation prevents all too acute angles being formed between the segments and the wall 13 of the container 10.

The segments 2 are in this case fixed in the container 10 by connecting the standing edge 7 to the wall 13 of the container 10 by means of a weld.

As is schematically represented in figure 14, this embodiment of the partitions 1 and the special positioning of the partitions 1 in relation to the manholes 11 make it possible to clean the compartments 12 with the help of a customary rotating sprinkler head which can be lowered via each of the manholes 11.

Indeed, as of the centre of a smaller manhole 11B, all the parts of the accompanying compartment 12 are easily accessible, as indicated in figure 14 by means of dotted lines.

As mentioned before, the segments 2 are provided near the smaller manholes 11B at a distance D2 thereof, which distance D2 is sufficiently large to be able to clean all the parts of the hollow side of said segments 2.

The specific drop-shape of the pipes 3 prevents any hidden corners being formed for a sprinkler head that has been lowered from a manhole, which would hinder the cleaning.

Moreover, the drop-shaped section makes it possible to optimally restrict the distance D2.

Some parts of neighbouring compartments 12 are accessible by means of a sprinkler head which has been lowered via a smaller manhole 11B and which is positioned underneath it. As a result, these parts may remain inaccessible to a sprinkler head which has been lowered via another possibly neighbouring manhole 11A, and vice versa.

The pressure of the cleaning jet is sufficiently high, such that an element in the container 10 can be cleaned if that element is visible so to say from the point of view of a lowered sprinkler head under one manhole 11 or another.

Lowering a sprinkler head as of the larger central manhole 11A makes it possible to clean at least all the parts that are not accessible to a sprinkler head since the latter is positioned in one of the smaller neighbouring manholes 11B. It is clear that the special shape and the special positioning of the partitions 1 according to the invention offer several advantages. The embodiment as represented combines several advantageous characteristics, but it is clear that not all aspects must be applied to be in correspondence with the invention.

The partitions 1 according to the invention may for example also be provided with a round pipe 3 instead of the drop-shaped pipe 3, which requires a somewhat larger distance D2 in most cases between the smaller manholes 11B and the nearby partition 1.

The segments 2 must not necessarily have a bent shape.

The bent shape of the segments 2, preferably according to a sufficiently small radius of curvature, preferably mainly in conformity with the radius of the container's 10 shell, results in segments 2 having a higher rigidity compared to the thickness of the used material. However, it is clear that the segments 2 can also be made flat.

The segments 2 must not be oriented such that the pipes 3 and the most laterally situated part of the segments 2 are situated in a plane crosswise to the longitudinal direction of the container 10.

This special orientation is advantageous in that all too acute angles are avoided and in that the general accessibility of the partitions 1 is optimised.

Also the special position of the partition 1 at the central manhole 11A, in particular at a small distance D1 of the centre line of the manhole 11A crosswise to the longitudinal direction of the cylindrical container 10, is not necessary but it is useful to promote the accessibility of the hollow side of these segments 2 for a sprinkler head which has been lowered as of said centrally situated manhole 11A.

The pipes 3 must not necessarily be placed at a smaller distance from one another at the bottom than at the top.

In the embodiment as discussed, the segments 2 do not have a fluidly bent shape, but they are provided with several bending lines obtained by folding a plate element 4. It is clear that the plate element can also be provided with a fluidly bent shape.

Naturally, the aforesaid folding treatment can also be replaced by rolling or pressing treatments.

The folds in the segments 2 can all be provided in the same direction and parallel to one another, such that, as mentioned above, a bent shape is approached, or as an alternative one may also choose for an alternating or a varied folding pattern, such that the aimed rigidity can be obtained and can be combined with other advantages, such as for example preventing acute angles at the connection of the segments 2 with the wall 13 of the container 10.

Some embodiments with variant folding patterns are represented in figures 18 to 20.

The segments 2 represented in figure 18 have a round pipe 3 and the most laterally situated parts of the segments 2 have one or several folds in the direction opposite to the folds that are provided between the pipe 3 and said laterally situated zone, in particular in order to obtain a connection with the wall 13 of the container 10 whereby acute angles are avoided. Also, the segments 2 are not positioned such in this embodiment that the pipes 3 and the most laterally situated part of the segments 2 are situated in a plane crosswise to the longitudinal direction of the cylindrical container 10.

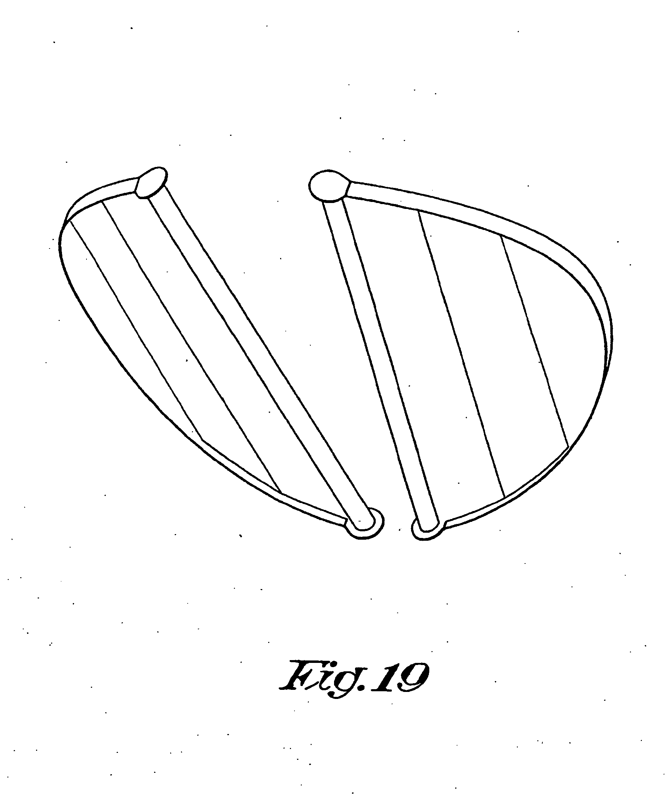

Figure 19 represents an embodiment with only two folds per segment 2. It is clear that, in this case, the folds must be made deeper if the same increased rigidity is aimed at.

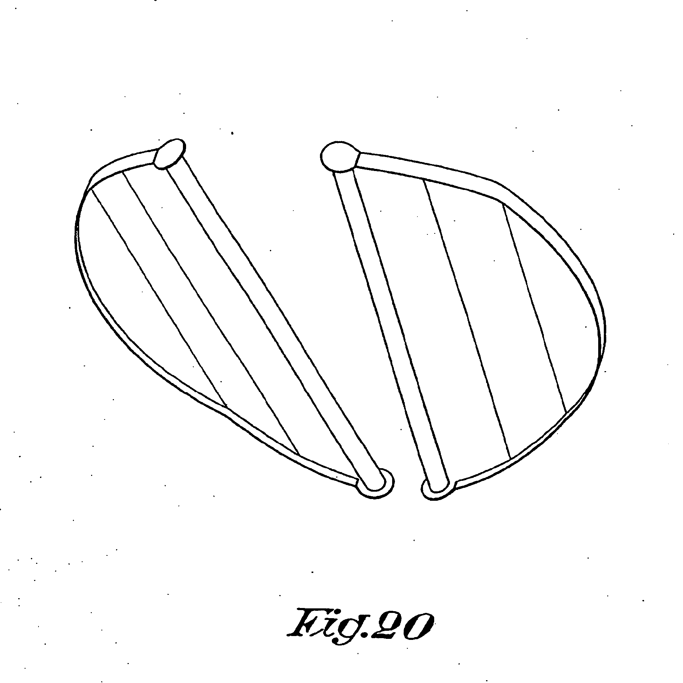

The embodiment as represented in figure 20 also has two folds per segment 2, but in the opposite direction, such that acute angles at the connection with the wall 13 of the container 10 are avoided.

The methods described for manufacturing such partitions 1 for cleanable liquid containers 10 can also be applied to manufacture partitions 10 for other liquid containers 10.

At the most laterally situated part, every segment 2 is preferably provided with an opening, which makes it possible to pump out a tilted liquid container 10.

The widening orientation of the pipes 3 from bottom to top is not an absolute requirement, but it makes it easier for a person to step in between and to lower himself as of a manhole 11A.

A parallel positioning of the pipes 3 at a too large distance would result in a too large opening between the compartments 12 and, consequently, in a whip-dampening effect that is too feeble.

As for the pipes 3, it is clear that also other strengthening means can be provided, such as a lath or the like, or a rolled profile or a profile obtained by means of extrusion or the like.

It is clear that the partitions 1 according to the invention can also be applied to and that the present invention also concerns non-cylindrical containers 10, for example elliptical containers and/or containers 10 having more or less or otherwise positioned manholes 11 which may also have another shape.

The present invention is by no means restricted to the embodiment given as an example and represented in the accompanying drawings; on the contrary, such an improved partition and an improved liquid container according to the invention can be made in all sorts of shapes and dimensions while still remaining within the scope of the invention as defined by the appended claims.

## Claims

1. A segment (2) for making an anti-whip partition for a cylindrical liquid container (10) that can be thoroughly cleaned, **characterised in that** it is formed of a pipe having a drop-shaped section (3) and a predominantly crescent shaped plate element (4), and **in that** the plate element (4) has a bent shape whereby the partition is built such that it may occupy a smaller surface than the sectional plane crosswise to the longitudinal direction of the container (10), sand **in that** the pipe (3) is formed of several deep folds at a side edge of the plate element (4).

2. A segment (2) for making an anti-whip partition for a cylindrical liquid container (10) that can be thoroughly cleaned, **characterised in that** it is formed of a pipe having a round-shaped section (3) and a predominantly crescent shaped plate element (4), and **in that** the plate element (4) has a bent shape whereby the partition is built such that it may occupy a smaller surface than the sectional plane crosswise to the longitudinal direction of the container (10), and **in that** the pipe is located at a side edge of the plate element (4).

3. Cylindrical liquid container (10) provided with one or several partitions (1) formed of two segments (2) according to claim 1 or claim 2 each comprising a pipe (3) and a plate element (4) having a bent shape, **characterized in that** the pipes (3) are placed at a small distance from one another, such that the space between both pipes is sufficient for a person to move from a first compartment to a second compartment and **in that** the different segments (2) are erected such that in the container (10) the pipes and the most laterally situated part of the segments (2) are situated in a plane crosswise to the longitudinal direction of the container (10).

4. Cylindrical liquid container (10) according to claim 3, **characterised in that** the container (10) is provided with one or several manholes (11), **characterised in that** the partitions (1) are positioned mainly in line or near the manholes (11), such that a minimum number of manholes (11) must be provided.

5. Cylindrical liquid container according to claim 4, **characterised in that** it is provided with three manholes (11), in particular one larger manhole (11A) which is centrally positioned and two smaller manholes (11B), whereby a partition (1) is provided at a relatively small distance (D1) of the centre line of the manhole (11A), and whereby a partition (1) is each time provided at a relatively larger distance (D2) from the manholes (11B), in particular somewhat in the direction of the larger manhole (11A).

6. Cylindrical liquid container (10) according to claim 5, **characterised in that** the partitions (1) near the smaller manholes (11B) comprise segments with a bent shape (2), and whereby the partitions (1) are placed such that the accompanying segments (2) are directed with their hollow side towards the nearest manholes (11B).

7. Method for manufacturing a segment (2) of a partition (1) according to claim 1 or claim 2 for a cylindrical liquid container (10), **characterised in that**, starting from a plate element (4), it comprises the necessary operations in order to provide folding lines, either by means of a folding machine or by means of rolling and pressing treatments.

## Patentansprüche

1. Segment (2) zur Herstellung einer Schwallschutztrennwand für einen zylindrischen Flüssigkeitsbehälter (10), der gründlich gereinigt werden kann, **dadurch gekennzeichnet, dass** es durch ein Rohr, das einen tropfenförmigen Querschnitt (3) aufweist, und ein vorwiegend halbmondförmiges Plattenelement (4) gebildet wird, und dass das Plattenelement (4) eine gebogene Form hat, wobei die Trennwand so gebaut ist, dass sie eine kleinere Oberfläche einnehmen kann als die Schnittebene quer zur Längsrichtung des Behälters (10), und dass das Rohr (3) durch mehrere tiefe Falten an einem Seitenrand des Plattenelements (4) gebildet wird.

2. Segment (2) zur Herstellung einer Schwallschutztrennwand für einen zylindrischen Flüssigkeitsbehälter (10), der gründlich gereinigt werden kann, **dadurch gekennzeichnet, dass** es durch ein Rohr, das einen runden Querschnitt (3) aufweist, und ein vorwiegend halbmondförmiges Plattenelement (4) gebildet wird, und dass das Plattenelement (4) eine gebogene Form hat, wobei die Trennwand so gebaut ist, dass sie eine kleinere Oberfläche einnehmen kann als die Schnittebene quer zur Längsrichtung des Behälters (10), und dass das Rohr sich an einem Seitenrand des Plattenelements (4) befindet.

3. Zylindrischer Flüssigkeitsbehälter (10), der mit einer oder mehreren Trennwänden (1) versehen ist, die durch zwei Segmente (2) nach Anspruch 1 oder Anspruch 2 gebildet werden, die jedes ein Rohr (3) und ein Plattenelement (4) mit einer gebogenen Form umfassen, **dadurch gekennzeichnet, dass** die Rohre (3) in einem geringen Abstand voneinander angeordnet sind, sodass der Raum zwischen beiden Rohren dafür ausreicht, dass eine Person sich von einem ersten Sektor zu einem zweiten Sektor bewegen kann, und dass die verschiedenen Segmente (2) so angeordnet sind, dass in dem Behälter (10) die Rohre und der am seitlichsten gelegene Teil der Segmente (2) sich in einer Ebene quer zur Längsrichtung des Behälters (10) befinden.

4. Zylindrischer Flüssigkeitsbehälter (10) nach Anspruch 3, **dadurch gekennzeichnet, dass** der Behälter (10) mit einem oder mehreren Mannlöchern (11) versehen ist, **dadurch gekennzeichnet, dass** die Trennwände (1) im Wesentlichen auf einer Linie oder in der Nähe der Mannlöcher (11) positioniert sind, sodass eine minimale Anzahl von Mannlöchern (11) vorgesehen werden muss.

5. Zylindrischer Flüssigkeitsbehälter nach Anspruch 4, **dadurch gekennzeichnet, dass** er mit drei Mannlöchern (11) versehen ist, spezieller einem größeren Mannloch (11A), das zentral positioniert ist, und zwei kleineren Mannlöchern (11B), wobei eine Trennwand (1) in einem relativ kleinen Abstand (D1) von der Mittellinie des Mannlochs (11A) vorgesehen ist, und wobei jedesmal eine Trennwand (1) in einem relativ größeren Abstand (D2) von den Mannlöchern (11B) vorgesehen ist, spezieller etwas in der Richtung des größeren Mannlochs (11A).

6. Zylindrischer Flüssigkeitsbehälter nach Anspruch 5, **dadurch gekennzeichnet, dass** die Trennwände (1) in der Nähe der kleineren Mannlöcher (11B) Segmente mit einer gebogenen Form (2) umfassen, und wobei die Trennwände (1) so angeordnet sind, dass die zugehörigen Segmente (2) mit ihrer hohlen Seite zu den am dichtesten gelegenen Mannlöchern (11B) gerichtet sind.

7. Verfahren zur Herstellung eines Segments (2) einer Trennwand (1) nach Anspruch 1 oder Anspruch 2 für einen zylindrischen Flüssigkeitsbehälter (10), **dadurch gekennzeichnet, dass** es, ausgehend von einem Plattenelement (4), die notwendigen Bearbeitungen zum Vorsehen von Falzlinien umfasst, entweder mittels einer Falzmaschine oder mittels Walz- oder Pressbearbeitungen.

## Revendications

1. Segment (2) pour la réalisation d'une paroi de séparation anti-fouettement pour un récipient cylindrique (10) destiné à des liquides, qui peut être nettoyé en profondeur, **caractérisé en ce qu'**il est réalisé à partir d'un tuyau possédant une section en forme de goutte (3) et à partir d'un élément en forme de plaque (4) possédant à titre principal une configuration en forme de croissant, et **en ce que** l'élément (4) en forme de plaque possède une configuration inclinée, la paroi de séparation étant construite de telle sorte qu'elle peut occuper une surface inférieure à celle du plan coupe transversalement par rapport à la direction longitudinale du récipient (10), et **en ce que** le tuyau (3) est formé à partir de plusieurs plis profonds à un bord latéral de l'élément (4) en forme de plaque.

2. Segment (2) pour la réalisation d'une paroi de séparation anti-fouettement pour un récipient cylindrique (10) destiné à des liquides, qui peut être nettoyé en profondeur, **caractérisé en ce qu'**il est réalisé à partir d'un tuyau possédant une section de forme ronde (3) et à partir d'un élément en forme de plaque (4) possédant à titre principal une configuration en forme de croissant, et **en ce que** l'élément (4) en forme de plaque possède une configuration inclinée, la paroi de séparation étant construite de telle sorte qu'elle peut occuper une surface inférieure à celle du plan coupe transversalement par rapport à la direction longitudinale du récipient (10), et **en ce que** le tuyau est situé à un bord latéral de l'élément (4) en forme de plaque.

3. Récipient cylindrique (10) destiné à des liquides, muni d'une ou de plusieurs parois de séparation (1) constituées par deux segments (2) selon la revendication 1 ou 2, comprenant respectivement un tuyau (3) et un élément (4) en forme de plaque possédant une configuration inclinée, **caractérisé en ce que** les tuyaux (3) sont placés à une courte distance l'un de l'autre de telle sorte que l'espace ménagé entre les deux tuyaux est suffisant pour permettre à une personne de passer d'un premier compartiment à un deuxième compartiment, et **en ce que** les différents segments (2) sont construits de telle sorte que, dans le récipient (10), les tuyaux et la partie des segments (2) située le plus latéralement sont disposés dans un plan transversal par rapport à la direction longitudinale du récipient (10).

4. Récipient cylindrique (10) destiné à des liquides selon la revendication 3, **caractérisé en ce que** le récipient (10) est muni d'un ou de plusieurs trous d'hommes (11) et **caractérisé en ce que** les parois de séparation (1) sont disposées principalement en ligne ou à proximité des trous d'hommes (11), de telle sorte que l'on doit prévoir un nombre minimal de trous d'hommes (11).

5. Récipient cylindrique (10) destiné à des liquides selon la revendication 4, **caractérisé en ce qu'**il est muni de trois trous d'hommes (11), en particulier d'un trou d'homme plus grand (11A) qui est disposé en position centrale et de deux trous d'hommes plus petits (11B), une paroi de séparation (1) étant prévue à une distance relativement minime (D1) de la ligne médiane du trou d'homme (11A), et une paroi de séparation (1) étant prévue à chaque fois à une distance plus grande (D2) par rapport aux trous d'hommes (11B), en particulier quelque peu dans la direction du trou d'homme plus grand (11A).

6. Récipient cylindrique (10) destiné à des liquides selon la revendication 5, **caractérisé en ce que** les parois de séparation (1) à proximité des trous d'hommes plus petits (11B) comprennent des segments de configuration inclinée (2), et de telle sorte que les parois de séparation (1) sont placées de telle manière que les segments (2) qui les accompagnent sont orientés avec leur côté creux en direction des trous d'hommes (11B) les plus proches.

7. Procédé de fabrication d'un segment (2) d'une paroi de séparation (1) selon la revendication 1 ou 2, pour un récipient cylindrique (10) destiné à des liquides, **caractérisé en ce que**, en partant d'un élément (4) en forme de plaque, il comprend les opérations nécessaires pour procurer des lignes de pliage, que ce soit au moyen d'une machine de formation de plis ou au moyen de traitements de laminage et de compression.
